# EUROPEAN PATENT APPLICATION

(11) **EP 4 534 871 A1**
(43) Date of publication of application: **09.04.2025**
(21) Application number: 23383027.2
(22) Date of filing: 05.10.2023
(51) Int. Cl.: F16D 66/02, F16D 66/00

(54) **BRAKE PAD WEAR SENSOR**

(71) Applicant: Sadeca Systems S.L.U., 08181 Sentmenat (ES)
(72) Inventor: VALLDEORIOLA MORALES, Marc, 08181 Sentmenat (ES)
(74) Representative: Ponti & Partners, S.L.P

(57) **Abstract**

Brake pad wear sensor (1) comprising a housing (5) and an electronic board (2), the housing (5) being provided with a wearable protrusion (50) whose end is intended to be fixed flush with the friction surface (10) of a brake pad (1), and the electronic board (2) being provided with a lateral protrusion (20) that extends inside said wearable protrusion (50), with an electrical measuring line (4) that runs along said lateral protrusion (20), and a layer of resistive material (22) that defines an electrical resistance in series, whose cross section extends towards the end of said lateral protrusion (20), so that both the wear sensor and the brake pad (1) wear in the same magnitude and direction, due to the simultaneous friction of both against a brake disc.

## Description

The present invention concerns a sensor aimed at continuously monitoring the wear of the brake pads for vehicles, more accurately predicting the friction thickness of the brake pads and the appropriate moment for their replacement.

### Background of the invention

Various sensors are known that warn of at least the proximity of the total wear of the brake pads.

For example, in patent document EP0637697A1 a brake pad wear probe is disclosed that contains a plurality of terminals rotated or bent in a U-shape with the positions of their tips offset from each other. The terminals are cut in stages according to the degree of wear of the brake pad. The terminals define powering routes to electromagnetic coils in the relays. The broken measurement power line status of the terminal can be detected in the respective relay by detecting an interruption in its path. As a result, electromagnetic switches operate in response to the degree of wear, lighting indicator lamps on a display to inform the driver about the wear status of the brakes.

For its part, patent document DE4308272C1 discloses a sensor element having a support formed by a metal-ceramic substrate that carries a network of resistors in the form of a thick film circuit, with several resistors in series, each bridged by a conductor that follows an electrical measurement line with loops, which are offset from each other in the direction of wear. The sensor element is commonly used in vehicle, cable car or crane brakes, verifying high reliability, being suitable for mass production, presenting an easily changeable structure.

However, it is still desirable to develop a brake pad wear sensor that allows the continuous measurement of said wear to be obtained, enabling real-time warning so that the replacement of said brake pads is carried out at the most appropriate time.

### Description of the invention

The purpose of the present invention is to provide a brake pad wear sensor comprising a housing and an electronic board, the housing being provided with a wearable protrusion whose end is intended to be fixed flush with the friction surface of a brake pad, and the electronic board being provided with a lateral protrusion which extends at least partially inside said wearable protrusion, wherein the electronic board comprises an electrical measuring line which runs along said lateral protrusion, wherein the electrical measuring line comprises a layer of resistive material which defines an electrical resistance in series and whose cross-section extends at least partially towards the end of said lateral protrusion. In this way, the wearable protrusion and the brake pad are lowered to the same extent, and in the same direction, due to the friction of both in parallel against a brake disc, thus being able to obtain with great precision the data of the degree of wear of the brakes, avoiding their deterioration and rupture due to a complete wear of the brake pad, interfering with each other metal parts.

It should be mentioned that the layer of resistive material is configured to wear in said wear direction from the moment the brake disc reaches it. Thanks to this configuration, the layer of resistive material varies its electrical resistance as a function of its wear, in particular, the resistance being greater, the greater the wear, that is, the more its cross section is reduced. Specifically, the measurement of the impedance at the ends of the measuring power line allows continuous and accurate monitoring of the wear of the brake pad as it is proportional to the wear of the layer of resistive material. And to clarify, by electronic board it is to be understood as what is also called a printed circuit board or PCB. And that the term resistive material would also encompass a semiconductor material, with both resistive and conductive properties to a degree to be determined for adequate functionality.

Preferably, the layer of resistive material comprises a layer of nickel-phosphorus alloy, so that a very consistent thickness layer is obtained that does not depend on the geometry thereof.

In addition, the nickel-phosphorus alloy layer is an electro-deposited film on the electronic board, so that the formation of the layer is by means of a simple process, obtaining homogeneous and faultless thicknesses.

The layer of resistive material optionally has a geometric shape comprising a progressive widening of its cross-section, such that the geometric shape itself is a design element and contributes to defining the magnitude of the electrical resistance.

In a preferred embodiment of the invention, the geometric shape of the layer of resistive material is triangular, such that the magnitude of the electrical resistance is progressive as the wear increases.

According to another aspect of the invention, the cross-section of the layer of resistive material extends completely to the end of said lateral protrusion, so that the ends are coincident. In this way, the layer of resistive material interacts at the same time as the lateral protrusion with the brake disc, producing simultaneous wear at the longitudinal end of the electronic board.

In more detail, the electronic board is made of polyimide, so that it can withstand the high temperatures produced by friction with the brake disc.

In addition, each end of the measuring power line comprises at least one conductive cable attached by means of a metal band, so that a robust and reliable attachment is obtained, which is maintained over time. And specifically, said joint between the conductor cable and each end of the measuring power line is a setting designed specifically for a joint between a cable and an electronic board.

In addition, the brake pad wear sensor comprises a temperature sensor, so that the sensor can provide information on the temperature reached in the brake system.

More specifically, said temperature sensor is an NTC resistor, providing the measurement accuracy of a digital temperature sensor.

It should be noted that the electrical measurement line comprises an opening portion defined by a conductive track whose path partially runs through the lateral protrusion. Thus, when the wear reaches the opening portion and makes it disappear, the electrical circuit defined by the electrical measuring line is opened, and the impedance measured between its ends becomes infinite, so that the sensor reliably detects that a limit wear level has been reached for the brake pad.

According to another aspect of the invention, the housing is defined by a phenolic resin overmoulded on the electronic board, which is capable of withstanding the thermal demands of the brake environment in the vehicle.

On the other hand, the housing comprises fixing means to the brake pad, for a solid union with the element whose wear is to be monitored.

Specifically, the fixing means are an elastic pin clip that allows a quick assembly, reaching the desired position reliably.

The attached drawings show, by way of non-limiting example, a brake pad wear sensor, constituted in accordance with the invention. Other characteristics and advantages of the brake pad wear sensor, object of the present invention, will be evident from the description of a preferred, but not exclusive embodiment, which is illustrated by way of non-limiting example in the attached drawings.

### Brief description of the drawings

For the better understanding of the description made herein, a set of drawings has been provided wherein, schematically and solely by way of a non-limiting example, a practical case of an embodiment is represented.
Figure 1 is a perspective view of the brake pad wear sensor, according to the present invention;
Figure 2 is a perspective view of the wear sensor mounted on a brake pad, according to the present invention;
Figure 3 is a perspective view with transparency of the brake pad wear sensor, according to the present invention;
Figure 4 is a detail view of the electronic board attached to the conductive cable of the brake pad wear sensor, according to the present invention;
Figure 5 is a detail view of the progressive wear of a brake pad together with the sensor, according to the present invention;
Figure 6 is a graph illustrating the upward variation of the electrical resistance as a function of the progressive wear of the layer of resistive material of the sensor, according to the present invention;
Figure 7 is a side view of another embodiment of the brake pad wear sensor, according to the present invention;

### Description of a preferred embodiment

Although reference has been made to a specific embodiment of the invention, it is evident to a person skilled in the art that the brake pad wear sensor described herein is susceptible to numerous variations and modifications, and that all the aforementioned details can be replaced by other technically equivalent details, without departing from the scope of protection defined by the attached claims.

From the aforementioned figures and the adopted reference numbers, an example of a preferred embodiment of the invention can be observed therein, comprising the parts and elements indicated and described in detail below.

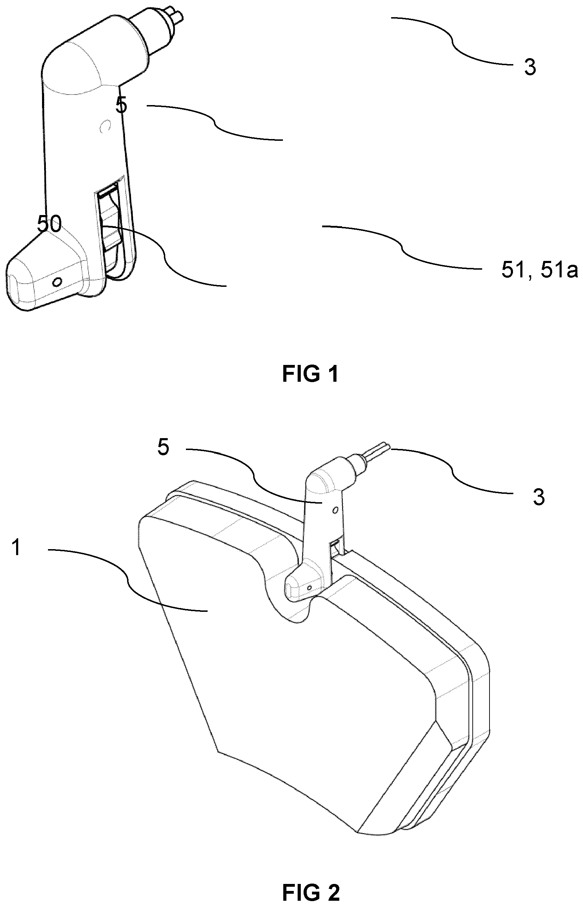

Figure 1 shows a perspective view of the brake pad wear sensor (1), showing the conductor cable (3) entering the housing (5) at an upper end, and with a wearable protrusion (50) at the opposite lower end. On the other side, the fixing means (51) can also be seen, which in particular are a pin clip (51a).

Figure 2 shows a perspective view of the wear sensor mounted on a brake pad (1), with the entrance of the conductor cable (3) to the housing (5), and the proper placement mode to fulfil its function of monitoring the wear of the brake pad (1).

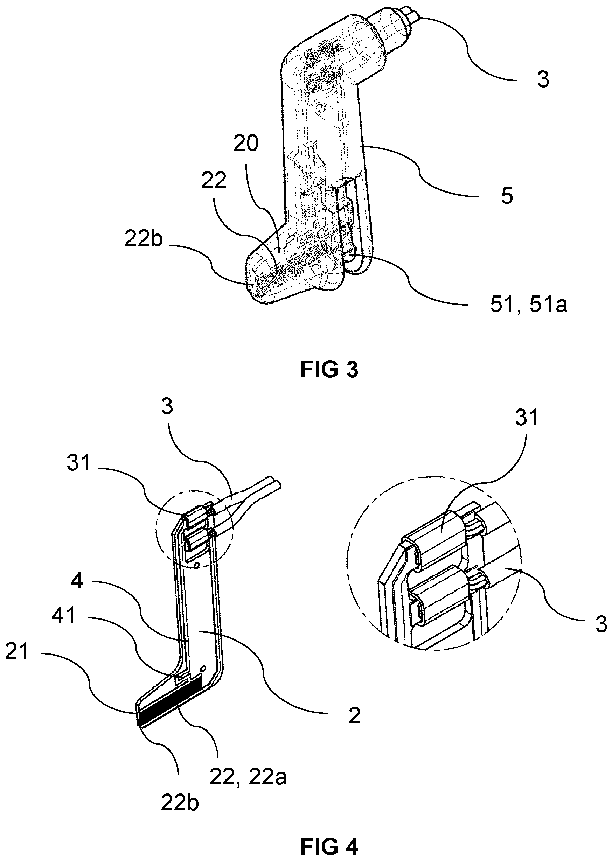

Figure 3 shows a perspective view with transparency of the brake pad wear sensor (1), showing greater detail with the lateral protrusion (20) in the direction of the brake disc. Inside, the layer of resistive material (22) can be seen with its contact point (22b). On the other hand, the entrance of the conductor cable (3) to the housing (5) can be seen, and at the bottom the position of the fixing means (51) with the insertion of the pin clip (51a).

Figure 4 shows a detailed view of the electronic board (2) attached to the conductor cable (3) of the brake pad wear sensor (1). The position of the edge (21) at the end of the electronic board (2) can be seen, which includes a layer of resistive material (22) on one of its faces, with a particular geometric shape (22a) that includes a contact point (22b) close to the edge (21). On the other side and at the top, the connection of the conductor cable (3) with the electronic board (2) can be seen by means of a band (31), starting from there the electrical measurement line (4) that includes an opening portion (41).

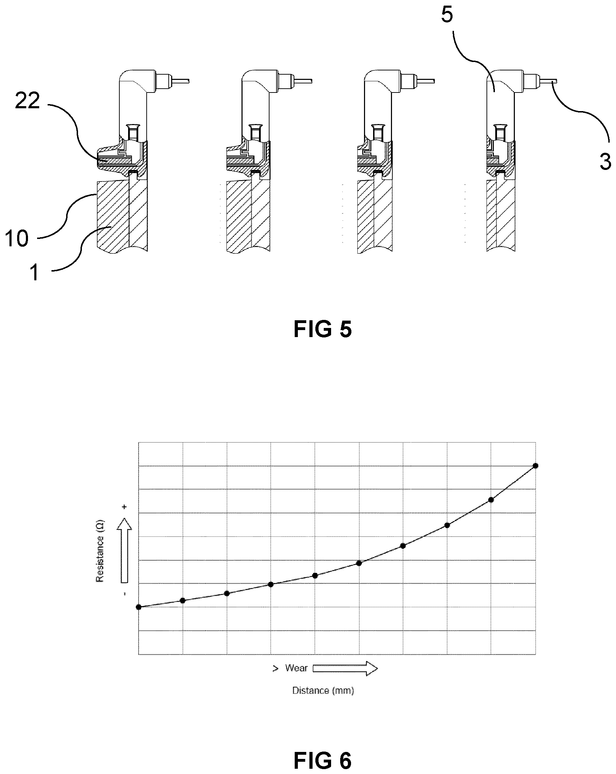

Figure 5 shows a detailed view of the progressive wear of a brake pad (1), in particular its friction surface (10), simultaneously with the sensor, in particular its layer of resistive material (22). Again, the entrance of the conductor cable (3) to the housing (5) can be seen in the upper part opposite.

Figure 6 shows an illustrative graph of the upward variation of the electrical resistance as a function of the progressive wear of the layer of resistive material (22) of the sensor.

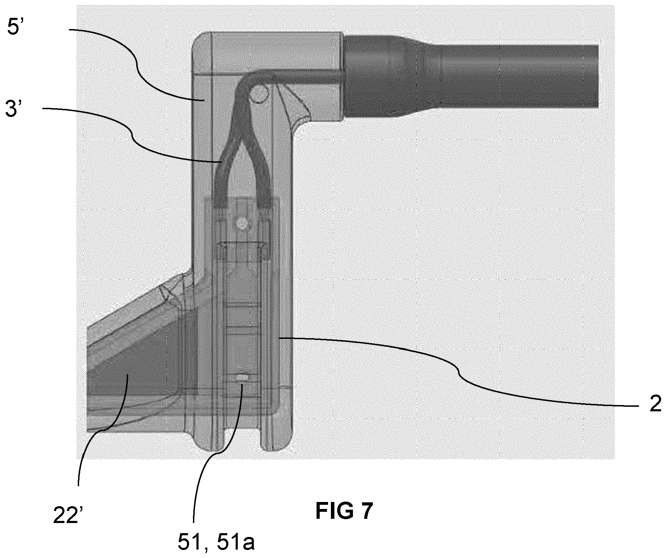

Figure 7 shows a side view of another embodiment of the brake pad wear sensor (1), in particular with another shape of the electronic board (2) and of the layer of resistive material (22). The entrance of the conductor cable (3) to the housing (5) is also seen from its upper part, and at the bottom the fixing means (51) with its pin clip (51a).

Thus, as can be seen in Figures 3 and 4, the brake pad wear sensor (1) comprises a housing (5) and an electronic board (2), the housing (5) being provided with a wearable protrusion (50) whose end is intended to be fixed flush with the friction surface (10) of a brake pad (1), and the electronic board (2) being provided with a lateral protrusion (20) that extends at least partially inside said wearable protrusion (50), where the electronic board (2) comprises an electrical measuring line (4) that runs through said lateral protrusion (20), where the electrical measuring line (4) comprises a layer of resistive material (22) that defines an electrical resistance in series and whose cross section extends at least partially towards the end of said lateral protrusion (20).

Optionally, as can be seen in Figure 7, the layer of resistive material (22') has a geometric shape that comprises a progressive widening of its cross section.

And more specifically, as can be seen in Figure 7, the geometric shape of the layer of resistive material (22') is triangular, with one of its vertices coinciding with the point of contact (22b)
Note that, alternatively, as seen in Figure 4, the geometric shape of the layer of resistive material (22') is a rectangle.

According to a preferred embodiment of the invention, as can be seen in figures 3 and 4, the cross-section of the layer of resistive material (22) extends completely to the end of said lateral protrusion (20), so that the two ends (22b, 21) are coincident.

According to another aspect of the invention, as can be seen in Figure 4, each end of the electrical measurement line (4) comprises at least one conductor cable (3) attached by means of a metal band (31), which is preferably made of copper.

Furthermore, as can be seen in Figure 3, the brake pad wear sensor (1) comprises a temperature sensor.

According to another embodiment of the invention, as can be seen in Figure 4, the electrical measurement line (4) comprises an opening portion (41) defined by a conductive track whose path partially runs through the lateral protrusion (20).

On the other hand, as can be seen in figures 3 and 7, the housing (5) is defined by a phenolic resin overmoulded on the electronic board (2), said phenolic resin optionally being Vyncolit.

According to another aspect of the invention, as can be seen in Figures 1 and 3, the housing (5) comprises fixing means (51) to the brake pad (1).

And in particular, as can be seen in Figures 1 and 3, the fixing means (51) is an elastic pin clip (51a).

The details, shapes, dimensions and other accessory elements, as well as the materials used in the manufacture of the brake pad (1) wear sensor, may be suitably replaced by others that are technically equivalent and do not depart from the essential elements of the invention or from the scope defined by the claims included below.

### List of numerical references:

- 1: brake pad
- 10: friction surface
- 2: electronic board
- 20: side protrusion
- 21: edge
- 22: resistive material layer
- 22nd: geometric shape
- 22b: point of contact
- 22c: widening
- 22d: alloy layer
- 3: lead cable
- 31: band
- 4: electrical measuring line
- 41: opening portion
- 5: housing
- 50: wearable protrusion
- 51: fixing means
- 51a: pin clip

## Claims

1. Brake pad wear sensor (1) comprising a housing (5) and an electronic board (2), the housing (5) being provided with a wearable protrusion (50) whose end is intended to be fixed flush with the friction surface (10) of a brake pad (1), and the electronic board (2) being provided with a lateral protrusion (20) that extends at least partially inside said wearable protrusion (50), where the electronic board (2) comprises an electrical measuring line (4) that runs through said lateral protrusion (20), **characterized in that** the electrical measuring line (4) comprises a layer of resistive material (22) that defines a series electrical resistance and whose cross section extends at least partially towards the end of said lateral protrusion (20).

2. Brake pad wear sensor (1), according to claim 1, **characterized in that** the layer of resistive material (22) comprises a layer of nickel phosphorus alloy (22a).

3. Brake pad wear sensor (1), according to claim 2, **characterized in that** the nickel-phosphorus alloy layer (22a) is a film electro-deposited on the electronic board (2).

4. Brake pad wear sensor (1), according to any of the preceding claims, **characterised in that** the layer of resistive material (22') has a geometric shape that comprises a progressive widening of its cross section.

5. Brake pad wear sensor (1), according to claim 4, **characterized in that** the geometric shape of the layer of resistive material (22') is a triangle.

6. Brake pad wear sensor (1), according to any of the preceding claims, **characterised in that** the cross section of the layer of resistive material (22) extends completely to the end of said lateral protrusion (20), so that two ends (22b, 21) are coincident.

7. Brake pad wear sensor (1), according to any of the preceding claims, **characterised in that** the electronic board (2) is made of polyimide.

8. Brake pad wear sensor (1), according to any of the preceding claims, **characterised in that** each end of the electrical measurement line (4) comprises at least one conductive cable (3) attached by means of a metal band (31).

9. Brake pad wear sensor (1), according to any of the preceding claims, which comprises a temperature sensor.

10. Brake pad wear sensor (1), according to claim 9, **characterised in that** the temperature sensor is an NTC resistor.

11. Brake pad wear sensor (1), according to any of the preceding claims, **characterised in that** the electrical measuring line (4) comprises an opening portion (41) defined by a conductive track whose path partially runs through the lateral protrusion (20).

12. Brake pad wear sensor (1), according to the preceding claims, **characterised in that** the housing (5) is defined by a phenolic resin overmoulded on the electronic board (2).

13. A brake pad wear sensor (1), according to any of the preceding claims, **characterized in that** the housing (5) comprises means of fixing (51) to the brake pad (1).

14. Brake pad wear sensor (1), according to claim 13, **characterised in that** the means of fixing (51) are an elastic pin clip (51a).
